# EUROPEAN PATENT SPECIFICATION

(11) **EP 3 184 771 B1**
(45) Date of publication and mention of the grant of the patent: **20.03.2019**
(21) Application number: 16205070.2
(22) Date of filing: 19.12.2016
(51) Int. Cl.: F01N 3/20, F01N 3/08

(54) **EXHAUST PURIFICATION APPARATUS**
ABGASREINIGUNGSVORRICHTUNG
APPAREIL DE PURIFICATION D'ÉCHAPPEMENT

(30) Priority: 22.12.2015 JP 2015250382
(43) Date of publication of application: 28.06.2017
(73) Proprietor: MITSUBISHI JIDOSHA KOGYO KABUSHIKI KAISHA, Tokyo 108-8410 (JP)
(72) Inventor: KAWASHIMA, Kazuhito, Tokyo 108-8410 (JP); ANODA, Hiroshi, Tokyo 108-8410 (JP); KATO, Ryoji, Tokyo 108-8410 (JP); TAKAHASHI, Masashi, Tokyo 108-8410 (JP); SATO, Daisuke, Tokyo 108-8410 (JP)
(74) Representative: Vossius & Partner Patentanwälte Rechtsanwälte mbB

(56) References cited:
- EP-A2- 2 562 376
- WO-A1-2008/149213
- DE-A1-102013 200 445
- US-A1- 2009 056 315
- US-A1- 2014 150 409

## Description

### BACKGROUND

The present invention relates to an exhaust purification apparatus provided with a selective reduction catalyst.

As a purifier for nitrogen oxide (hereinafter, referred to as "NOx") in lean exhaust discharged from a diesel engine which is an internal-combustion engine, an exhaust purification apparatus is known that uses a nitrogen oxide trapping catalyst (hereinafter, referred to as "NTC") or a selective reduction catalyst (hereinafter, referred to as "SCR catalyst") provided in an exhaust passage.

The NTC occludes NOx in an occlusion material such as barium (Ba) in the form of nitrate in a lean atmosphere of the exhaust, releases the NOx in the process where carbon monoxide (CO) flowing in under a rich atmosphere of the exhaust and the occlusion material form carbonate and further, reduces and purifies the released NOx by using surplus CO and hydrocarbon (HC) or the like.

The SCR catalyst generates ammonia (NH₃) by hydrolyzing, on the catalyst, urea water supplied into the exhaust passage from the exhaust upstream side of the catalyst, and selectively reduces and purifies NOx by the ammonia (NH₃) under a lean atmosphere of the exhaust. An example of such an exhaust purification apparatus using the SCR catalyst is disclosed in JP-A-2006-274986, US 20090056315 A1 or WO 2008149213 A1.

At the SCR catalyst, in a high region of the catalyst temperature, the speed of the oxidation reaction of ammonia (NH₃) proceeding secondarily with respect to the reduction reaction of the NOx by the ammonia (NH₃) increases. For this reason, the amount of ammonia (NH₃) used for the NOx reduction decreases, and as a consequence, a large amount of urea water is required for maintaining the NOx purification performance and this increases the consumption amount of the urea water.

### SUMMARY

An object of the present invention is to suppress the consumption amount of the urea water while maintaining the purification efficiency of the nitrogen oxide (NOx).

In order to achieve the above object, according to the invention, there is provided an exhaust purification apparatus according to claim 1.

### BRIEF DESCRIPTION OF THE DRAWINGS

FIG. 1 is a view showing a schematic structure of an exhaust purification apparatus according to an embodiment of the present invention.
FIG. 2 is a map showing characteristics of catalyst temperatures, a target value of supply of urea water and the occlusion rate of an NOx trapping catalyst.
FIG. 3 is a flowchart showing the contents of normal NOx purge processing which is one of the exhaust purification processes of the exhaust purification apparatus
FIG. 4 is a flowchart showing the contents of decrease NOx purge processing which is one of the exhaust purification processes of the exhaust purification apparatus
FIG. 5 is a flowchart showing the contents of DPF regeneration processing which is one of the exhaust purification processes of the exhaust purification apparatus.
FIG. 6 is a flowchart showing the contents of urea water injection processing which is one of the exhaust purification processes as a first embodiment of the exhaust purification apparatus according to the present invention.
FIG. 7 is a flowchart showing the contents of urea water injection processing which is one of the exhaust purification processes as a second embodiment of the exhaust purification apparatus according to the present invention.
FIG. 8 is a flowchart showing the contents of urea water injection processing which is one of the exhaust purification processes as a third embodiment of the exhaust purification apparatus according to the present invention.

### DETAILED DESCRIPTION OF EXEMPLARY EMBODIMENTS

Hereinafter, an embodiment of the present invention will be described by using the drawings. Considering the visibility of the drawings, components are sometimes shown partially omitted, broken or the like.

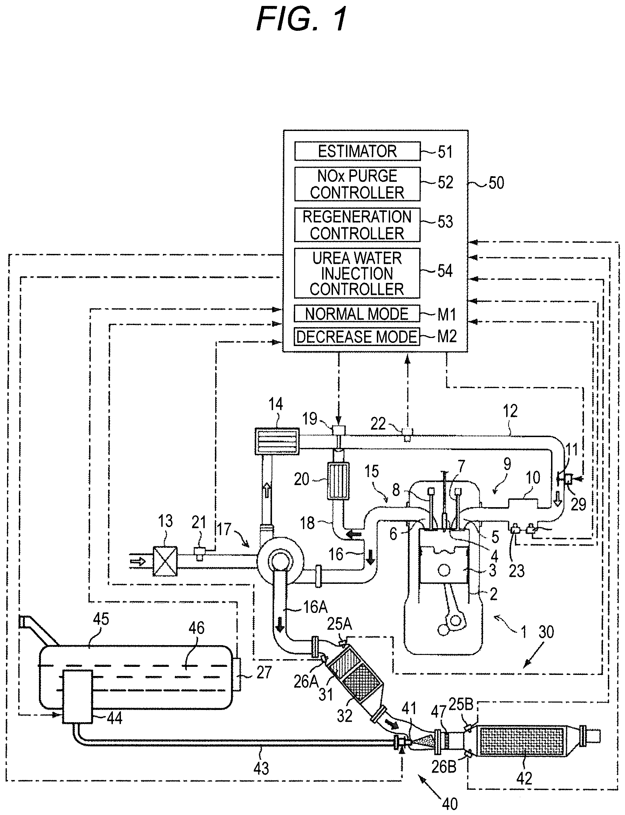

An exhaust purification apparatus 30 according to the present embodiment is applied to a multiple cylinder diesel engine (hereinafter, referred to as "engine") 1 which is an internal-combustion engine mounted on a vehicle. While one of a plurality of cylinders 2 provided in the engine 1 is shown in FIG. 1, the other cylinders 2 have a similar structure. In the cylinder 2 of the engine 1, a piston 3 having a cavity formed on its top surface is disposed in the cylinder 2 in such a manner as to reciprocate in a vertical direction.

A cylinder head situated in an upper part of the cylinder 2 is provided with an in-cylinder injection valve 4 which is an injector for fuel injection. To the in-cylinder injection valve 4, a high-pressure fuel adjusted to a predetermined fuel pressure by a common rail is supplied. This fuel is gas oil which is a mixture of hydrocarbon (HC). The in-cylinder injection valve 4 whose tip portion is provided so as to protrude into the in-cylinder space of the cylinder 2 injects the high-pressure fuel into the in-cylinder space. The amount of fuel injection from the in-cylinder injection valve 4 and the injection timing thereof are controlled by an engine control device 50 as a controller.

The cylinder head is provided with an intake port 5 and an exhaust port 6 communicating with the in-cylinder space of the cylinder 2 and an intake valve 7 and an exhaust valve 8 for opening and closing these intake port 5 and exhaust port 6. On the intake upstream side of the intake port 5, an intake manifold (hereinafter, referred to as "inmani") 9 is connected. The inmani 9 is provided with a surge tank 10 for temporarily storing air represented by the white arrows flowing toward the intake port 5. To the end on the intake upstream side of the inmani 9, a throttle body 29 incorporating an electronically controlled throttle valve 11 is connected. The amount of air circulating toward the inmani 9 is adjusted according to the opening degree (throttle opening degree) of this throttle valve 11. The throttle opening degree is adjusted by the throttle body 29 being controlled by the engine control device 50. On the upstream side of the throttle body 29, an intake passage 12 is connected. On the most upstream side of the intake passage 12, an air filter 13 is provided, and the fresh air (air) filtered by the air filter 13 is introduced into the intake passage 12.

On the exhaust downstream side of the exhaust port 6, an exhaust manifold (hereinafter, referred to as "exmani") 15 formed so as to merge from a plurality of cylinders 2 is connected. On the exhaust downstream side of the exmani 15, an exhaust passage 16 where the exhaust represented by the black arrows discharged from the engine 1 flows is connected. The intake and exhaust system of the engine 1 is provided with a turbocharger (supercharger) 17 that supercharges intake air into the cylinder 2 by using the exhaust pressure. The turbocharger 17 is a supercharger interposed over both the intake passage 12 and the exhaust passage 16. The turbocharger 17 rotates the turbine on the exhaust passage 16 with the exhaust pressure in the exhaust passage 16 and drives the compressor on the intake passage 12 by using the rotative force thereof, thereby compressing the intake air on the side of the intake passage 12 and performing supercharging to the engine 1. On the intake downstream side of the compressor on the intake passage 12, an intercooler 14 is provided, and the compressed air is cooled.

The engine 1 according to the present embodiment is provided with an EGR passage 18 (also called exhaust recirculation passage or return passage) that returns the exhaust circulating in the exhaust passage 16 to the intake passage 12. The EGR passage 18 causes the exhaust passage 16 on the exhaust upstream side of the turbine of the turbocharger 17 and the intake passage 12 on the intake downstream side of the compressor to communicate with each other, and forms a so-called high-pressure EGR passage. At the part of connection between the EGR passage 18 and the intake passage 12, an EGR valve 19 is disposed. The amount of return gas circulating in the EGR passage 18 is adjusted according to the degree of opening of the EGR valve 19. The degree of opening of the EGR valve 19 is controlled by the engine control device 50. For example, during a regeneration control described later, the engine control device 50 controls the degree of opening of the EGR valve 19 to 0 (closes the valve), and cuts the return gas. The EGR passage 18 is provided with an EGR cooler 20 for cooling the return gas.

When the EGR valve 19 is controlled so as to be opened, part of the exhaust flowing in the exhaust passage 16 on the upstream side of the turbocharger 17 is introduced into the EGR passage 18, and the exhaust introduced into the EGR passage 18 is cooled by the EGR cooler 20 and supplied to the intake passage 12 on the downstream side of the turbocharger 17. As described above, by returning part of the exhaust to the intake air, the combustion temperature in the combustion chamber of the engine 1 is reduced, so that the NOx discharge amount can be reduced.

The vehicle is mounted with the exhaust purification apparatus 30. The exhaust purification apparatus 30 uses both a nitrogen oxide trapping catalyst 31 (hereinafter, referred to as "NOx trapping catalyst") and a urea SCR (selective catalytic reduction) system 40.

In an exhaust passage 16A on the exhaust downstream side of the turbine, the NOx trapping catalyst 31, a filter 32 and a selective reduction catalyst (hereinafter, referred to as "SCR catalyst") 42 which is one of the components of the urea SCR system 40 which constitute the exhaust purification apparatus 30 are provided so as to be interposed in this order from the upstream side in the direction of flow of the exhaust. The exhaust circulating in the exhaust passage 16A is purified in the exhaust purification apparatus 30, and then, discharged to the outside of the vehicle through a non-illustrated muffler or the like. The exhaust purification apparatus 30 includes the engine control device 50.

The NOx trapping catalyst 31 occludes the NOx in the exhaust on a support as nitrate under an oxidizing atmosphere (a state where the exhaust air-fuel ratio is leaner than a theoretical air-fuel ratio), releases the occluded NOx under a reducing atmosphere (a state where the exhaust air-fuel ratio is richer than the theoretical air-fuel ratio) and reduces it to nitrogen (N₂), and is a known catalyst having functions. Corresponding to these functions, the NOx trapping catalyst 31 supports an occlusion material performing an NOx occlusion function and a precious metal element or the like performing a reduction function.

The NOx trapping catalyst 31 has the property of having excellent NOx purification performance in a certain temperature region (catalyst active region) (having a peak of the NOx purification performance in a certain catalyst active region). In other words, the NOx purification performance is not always constant but changes according to the catalyst temperature Ta of the NOx trapping catalyst 31, and exhibits the highest NOx purification performance in the certain temperature region.

In the present embodiment, when the amount of NOx occluded in the NOx trapping catalyst 31 becomes close to a maximum amount (saturated state), control to release the NOx occluded in the NOx trapping catalyst 31 and reduce it to nitrogen (N₂) (hereinafter, this will be referred to as "NOx purge control") is executed by the engine control device 50. Moreover, in the present embodiment, the NOx purge control is also executed when the supply amount of urea water 46 used in the SCR catalyst 42 is adjusted.

The NOx trapping catalyst 31 has the property that the sulfur component (predetermined component, referred to merely as S) in the exhaust can be occluded. The sulfur component having been occluded in the NOx trapping catalyst 31 is released only in a very small amount by the above-described NOx purge control. For this reason, in the present embodiment, the ability (performance) of the NOx trapping catalyst 31 to occlude NOx which ability is the original function thereof decreases because of the gradually increasing sulfur component. This is called S poisoning, and in order to eliminate the S poisoning of the NOx trapping catalyst 31, control to release this sulfur component from the NOx trapping catalyst 31 (hereinafter, this will be referred to as S purge control) is executed by the engine control device 50 separately from the NOx purge control.

The filter 32 is a porous filter that collects particulate matter (hereinafter, referred to as "PM") in the exhaust, and when the exhaust passes near or through the wall body of the porous filter, PM is collected in the wall body and on the wall body surface. In the filter 32, continuous regeneration where the collected PM is continuously oxidized and regeneration control where PM is forcibly burned by the engine control device 50 to regenerate the filter 32 are executed. The PM collected by the filter 32 is oxidized (burned) by the nitrogen dioxide (NO₂) in the exhaust in the continuous regeneration or the regeneration processing, and discharged as carbon dioxide (CO₂). The nitrogen dioxide (NO₂) remaining in the filter 32 is decomposed into nitrogen (N₂) and discharged. For this reason, the exhaust is purified, so that the discharge amount of the PM and NOx can be significantly reduced.

In the present embodiment, when the NOx purge control is executed, post injection by the in-cylinder injection valve 4 is performed in order to bring the exhaust into the reducing atmosphere (the state where the exhaust air-fuel ratio is richer than the theoretical air-fuel ratio). That is, by injecting the fuel from the in-cylinder injection valve 4 into the cylinder at the timing where no contribution is made to the torque (for example, in the latter half of the expansion stroke, or the exhaust stroke), unburned fuel (gas oil) as the reducing agent is supplied to the exhaust passage 16. Moreover, in order to bring the exhaust into the reducing atmosphere (the state where the exhaust air-fuel ratio is richer than the theoretical air-fuel ratio), the following may be performed: An injector is disposed on the exhaust passage 16A immediately on the upstream side of the NOx trapping catalyst 31, and fuel (gas oil) containing hydrocarbon (HC) or the like serving as the reducing agent is injected from the injector to increase the temperature of the NOx trapping catalyst 31. That is, examples of purification rate increasing means for bringing into the reducing atmosphere the exhaust serving as an environmental condition for executing the NOx purge control include the in-cylinder injection valve 4 which is a component for executing the post injection and a component for injecting fuel (gas oil) to the exhaust passage 16A immediately on the upstream side of the NOx trapping catalyst 31. That is, the purification rate increasing means for bringing into the reducing atmosphere the exhaust serving as an environmental condition for executing the NOx purge control and increasing the target purification rate of the NOx at the NOx trapping catalyst 31 is not limited to a specific component.

The urea SCR system 40 is provided with a urea water injection valve 41 as a urea water supplier that supplies the urea water 46 as the reducing agent (addition agent) to the exhaust, the SCR catalyst 42 for reducing the NOx contained in the exhaust by using the ammonia (NH₃) generated from the urea water 46, a urea water tank 45 that stores the urea water 46 for injection from the urea water injection valve 41, a mixer 47 disposed between the urea water injection valve 41 and the SCR catalyst 42, and a urea water injection controller 54 that controls the actuation of the urea water injection valve 41 and a urea water pump 44. While the urea water injection controller 54 is described as a mode of being provided in the engine control device 50 in the present embodiment, it may be a component separate from the engine control device 50.

To the urea water injection valve 41, the urea water tank 45 where the urea water 46 is stored is connected through a supply line 43. The urea water tank 45 is provided with the urea water pump 44, and the urea water 46 is supplied up to the urea water injection valve 41 by the driving of the urea water pump 44. The urea water tank 45 is provided with a remaining amount detection sensor 27 as a urea remaining amount detector that detects the remaining amount of the urea water 46 (urea water remaining amount L) in the tank.

The urea water injection valve 41 is disposed in the exhaust passage 16A on the exhaust upstream side of the SCR catalyst 42, and injects the urea water 46 into the exhaust passage 16A to thereby supply it into the exhaust and the SCR catalyst 42. The urea water injection valve 41 is an electromagnetic valve that becomes on and off; when it is closed, the injection of the urea water 46 is intercepted and when it is opened, the injection of the urea water 46 is performed. The urea water injection valve 41 has its opened state controlled based on the engine load and the catalyst temperature Tb so that injection is performed in a basic injection amount which is the injection amount of the urea water 46 necessary for the reduction processing of the NOx discharged from the engine 1.

The mixer 47 is disposed in the exhaust passage 16A between the urea water injection valve 41 and the SCR catalyst 42. The urea water 46 injected in a spray form from the urea water injection valve 41 has its atomization promoted by being diffused by the mixer 47, vaporizes and becomes minute particles to be mixed in the exhaust, and uniformly flows into the SCR catalyst 42 to be in contact with the SCR catalyst 42.

The SCR catalyst 42 is a known catalyst where vanadium, molybdenum, tungsten, zeolite or a precious metal is caused to adhere as an active catalytic component to a support of a honeycomb structure formed of ceramic, titanium oxide or the like. The SCR catalyst 42 uses, as the reducing agent, ammonia (NH₃) generated by hydrolyzing and pyrolyzing with the heat of the exhaust the urea water 46 injected from the urea water injection valve 41 and diffused by the mixer 47 in the exhaust passage 16A (CO(NH₂)₂→NH₃+HOCN, HOCN+H₂O→4NH₃+CO₂). The SCR catalyst 42 reacts with the NOx in the exhaust on the catalyst and reduces (purifies) the NOx to nitrogen (N₂) and water (H₂O). The SCR catalyst 42 is in an ideal reaction temperature zone (activating temperature region) at approximately 170 °C to 600 °C although this differs according to the kind of the active catalytic component.

It is known that the urea SCR system 40 has a problem in that part of the ammonia (NH₃) is discharged into the atmosphere as it is (ammonia slip) . For this reason, the addition amount (injection amount) of the urea water 46 is adjusted to an optimum amount necessary for NOx purification by controlling the urea water injection valve 41 by the urea water injection controller 54. This optimum amount is the basic injection amount. In the urea water injection controller 54, the NOx discharge amount is previously estimated, and the injection time and the injection timing of the urea water 46 are set by a map or the like in consideration of the activating temperature and the absorption and desorption of the SCR catalyst 42. For this reason, in the urea SCR system 40 according to the present embodiment, the opening and closing time of the urea water injection valve 41 is controlled by the urea water injection controller 54 so that the urea water 46 is supplied into the exhaust passage 16A with the optimum injection amount and injection timing. For this reason, a high NOx purification rate can be obtained while the ammonia slip is suppressed.

Between the air filter 13 and the compressor on the intake passage 12, an air flow sensor 21 that detects the intake air flow amount is provided. The intake air flow amount is a parameter corresponding to the flow amount of the air having passed through the air filter 13. Between the EGR valve 19 and the surge tank 10 on the intake passage 12, an air-fuel ratio sensor 22 for detecting the air-fuel ratio of the intake air is provided. The air-fuel ratio sensor 22 is a so-called linear air-fuel ratio sensor that detects the oxygen concentration of the intake air circulating in the intake passage 12 and outputs a value proportional to the oxygen concentration. In the surge tank 10, an inmani pressure sensor 23 and an intake air temperature sensor 24 are provided. The inmani pressure sensor 23 detects the pressure in the surge tank 10 as the inmani pressure, and the intake air temperature sensor 24 detects the intake air temperature in the surge tank 10.

On the upstream side of the NOx trapping catalyst 31 on the exhaust passage 16A, an air-fuel ratio sensor 25A that detects the air-fuel ratio of the exhaust flowing into the NOx trapping catalyst 31 and a temperature sensor 26A that detects the exhaust temperature (the catalyst temperature Ta of the NOx trapping catalyst 31) are provided. Moreover, immediately on the upstream side of the SCR catalyst 42 on the exhaust passage 16A, an air-fuel sensor 25B that detects the air-fuel ratio of the exhaust flowing into the SCR catalyst 42 and a temperature sensor 26B that detects the exhaust temperature (the catalyst temperature Tb of the SCR catalyst 42) are provided. In addition to these, for example, an engine rotation speed sensor that detects the rotation speed of the engine 1, a cooling water temperature sensor that detects the temperature of the cooling water of the engine 1 and a fuel pressure sensor that detects the pressure of the fuel injected from the in-cylinder injection valve 4 may be provided. The pieces of information detected by the sensors 21 to 28 are transmitted to the engine control device 50, and used as control parameters.

The vehicle mounted with the engine 1 is mounted with the engine control device (controller) 50. This engine control device 50 is constructed as an LSI device where a CPU, a ROM, a RAM and the like are integrated or an embedded electronic device, and is connected to a communication line of an in-vehicle network provided on the vehicle. The engine control device 50 is an electronic control device that integrally controls extensive systems such as an ignition system, a fuel system, an intake and exhaust system and a valve system related to the engine 1, and controls the amount of air supplied to the cylinders 2 of the engine 1, the fuel injection amount, the ignition time of the cylinders 2, the supercharging pressure and the like. To the input port of the engine control device 50, the above-described sensors 21 to 28 are connected through signal lines. To the output port of the engine control device 50, the above-described in-cylinder injection valve 4, EGR valve 19, throttle body 29, urea water injection valve 41 and urea water pump 44 are connected through signal lines.

In the present embodiment, concrete objects to be controlled by the engine control device 50 include the injection amount of the fuel injected from the in-cylinder injection valve 4 and the injection timing thereof, the actuation state of the turbocharger 17, the throttle opening degree, the opening degree of the EGR valve 19 and the injection amount of the urea water 46 as the injection amount of the reducing agent injected from the urea water injection valve 41 and the injection timing thereof.

In the present embodiment, in particular, the NOx purge control of the NOx trapping catalyst 31, the regeneration control of the filter 32 and a later-described urea water injection control which controls are executed by the engine control device 50 will be described in detail. A urea water injection control mode is provided with a normal mode M1 and a decrease mode M2 which have different control contents.

The exhaust temperature changes according to the operating region (engine load) of the engine 1, and has a tendency to increase as the load increases. The engine load is obtained, for example, by the engine rotation number and the accelerator opening degree. Moreover, in the exhaust purification apparatus 30 according to the present embodiment, the NOx trapping catalyst 31 and the SCR catalyst 42 are provided as a plurality of NOx catalysts having different reducing methods and different catalyst activating temperatures. In the exhaust purification apparatus 30, the NOx in the exhaust is purified by the NOx trapping catalyst 31 and the SCR catalyst 42, and the PM is purified by the filter 32. In the present embodiment, in a high-load operation region of the engine 1, the ratio of the NOx purified by the SCR catalyst 42 that is high in NOx purification performance in a high-temperature region is set to be higher than that of the NOx trapping catalyst 31. Moreover, in the present embodiment, in a low-load operation region of the engine 1, the ratio of the NOx purified by the NOx trapping catalyst 31 that is higher in NOx purification performance in a low-temperature region than that of the SCR catalyst 42 is set to be high. For this reason, as a whole of the exhaust purification apparatus 30, high NOx purification performance can be ensured over the entire operation region of the engine 1.

However, at the SCR catalyst 42, if the catalyst temperature Tb in the catalyst activating temperature region becomes equal to or higher than a first predetermined temperature T1, the speed of the oxidation reaction of ammonia (NH₃) proceeding secondarily with respect to the NOx reduction reaction by ammonia (NH₃) increases. For this reason, the amount of ammonia (NH₃) used for the NOx reduction decreases; as a consequence, in order to maintain the NOx purification performance, the addition amount (injection amount) of the urea water 46 increases to increase the urea water consumption amount.

Accordingly, the present embodiment is provided with, in order to suppress the consumption amount of the urea water 46 while maintaining the NOx purification rate, the normal mode M1 in which the supply amount of the urea water 46 for ensuring the amount of ammonia necessary for the purification of the NOx at the SCR catalyst 42 is injected from the urea water injection valve 41 into the exhaust passage 16A and the decrease mode M2 in which the supply amount of the urea water 46 injected from the urea water injection valve 41 into the exhaust passage 16A is suppressed compared with in the normal mode M1. These normal mode M1 and decrease mode M2 are possessed by the engine control device 50. The normal mode M1 and the decrease mode M2 are previously stored and set in the ROM.

That is, the exhaust purification apparatus 30 is provided with the engine control device 50 as a component for executing the NOx purge control and the regeneration control of the filter 32, and the normal mode M1 and the decrease mode M2 of the urea water injection control. In the present embodiment, the engine control device 50 is provided with an estimator 51, an NOx purge controller 52 as a purge controller, a regeneration controller 53, a urea water injection controller 54, the normal mode M1 and the decrease mode M2. These elements may be implemented by an electronic circuit (hardware) or may be programmed as software, or these functions may be provided in a manner such that part thereof is provided as hardware and the remainder, as software.

The estimator 51 estimates the amount of NOx occluded in the NOx trapping catalyst 31 (referred to as NOx occlusion rate A), the amount of NOx occluded in the SCR catalyst 42 (referred to as NOx occlusion rate B) and the amount of PM accumulated on the filter 32 (referred to as PM accumulation amount D) . As the method of estimating the NOx occlusion rates A and B, various known technologies are applicable; for example, the estimation can be performed based on information such as the operation region of the engine 1, the temperature of the exhaust, the air-fuel ratio and the flow amount which information is captured from the above-described sensors.

Typically, the NOx occlusion rates A and B of the NOx trapping catalyst 31 and the SCR catalyst 42 increase as the exhaust temperature of the engine 1 and the catalyst temperature increases. At the NOx trapping catalyst 31, since the occluded NOx is released and reduced when the NOx purge control is executed, the NOx occlusion amount A decreases at a predetermined speed, so that NOx can be efficiently occluded again. That is, the occlusion amount increases. Moreover, the NOx trapping catalyst 31 has the property that the occlusion rate decreases when the catalyst temperature Ta becomes a second predetermined temperature T2 which is higher than the first predetermined temperature T1. For this reason, to cause the NOx trapping catalyst 31 to effectively function, it is preferable to use it at a temperature equal to or lower than the second predetermined temperature T2.

On the other hand, at the SCR catalyst 42, even if the catalyst temperature Tb exceeds the second predetermined temperature T2 which is higher than the first predetermined temperature T1, the occlusion rate is more unlikely to decrease than that of the NOx trapping catalyst 31. At the SCR catalyst 42, when the urea water 46 injected from the urea water injection valve 41 is hydrolyzed and ammonia (NH₃) necessary for reduction is generated, the occluded NOx is released and reduced. For this reason, the NOx occlusion rate B decreases at a predetermined speed, so that NOx can be effectively occluded again.

However, when the catalyst temperature Tb becomes equal to or higher than the first predetermined temperature T1, the consumption amount of the urea water 46 increases as described above; therefore, when the consumption amount of the urea water 46 is suppressed, it is preferable to suppress the amount of injection from the urea water injection valve 41 when the catalyst temperature Tb is equal to or higher than the first predetermined temperature T1. Moreover, since it is necessary to provide warning to the driver and inhibit engine restart when the remaining amount of the urea water 46 in the urea water tank 45 becomes small in some vehicle use regions, suppression of the consumption amount of the urea water 46 is demanded also from such a viewpoint.

Moreover, as an example of the method of estimating the PM accumulation amount D, the estimator 51 estimates the amount of PM discharged from the engine 1 based on the rotation speed of the engine 1, the engine load and the like and integrates this from the end of the previous regeneration control to thereby estimate the PM accumulation amount D. Alternatively, a method is also known where the differential pressure between the upstream and downstream of the filter 32 is detected or estimated and the PM accumulation amount D is estimated based on this differential pressure, and the estimator 51 may estimate the PM accumulation amount D by using such a method. The estimator 51 transmits the estimated NOx occlusion amounts A and B and PM accumulation amount D to the NOx purge controller 52, the regeneration controller 53 and the urea water injection controller 54.

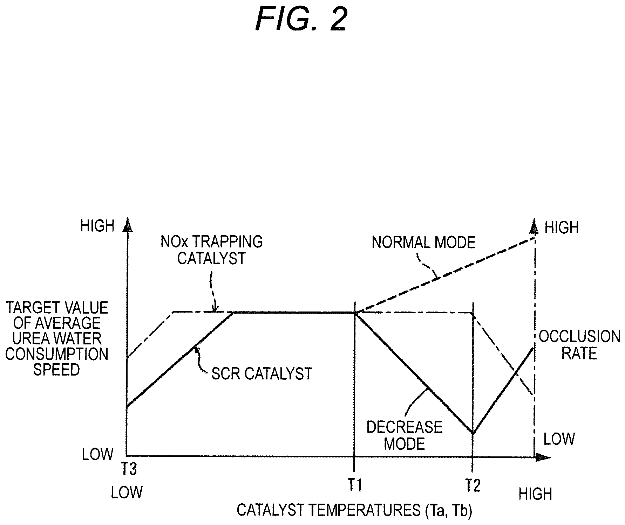

FIG. 2 is a map showing characteristics of the catalyst temperatures Ta and Tb of the NOx trapping catalyst 31 and the SCR catalyst 42, the injection amount (target supply mount) of the urea water 46 and the occlusion rate of the NOx trapping catalyst 31. In FIG. 2, the broken line represents the characteristic of the injection amount (target supply amount) of the urea water 46 at the time of the normal mode M1 and the solid line represents the characteristic of the injection amount (target supply amount) of the urea water 46 at the time of the decrease mode M2. The injection amount (target supply amount) at the time of the normal mode M1 is the average injection amount, and the injection amount (target supply amount) at the time of the decrease mode M2 is set so as to be an injection amount (target supply amount) smaller in a specific catalyst temperature region (T1 to T2) than the injection amount (target supply amount) at the time of the normal mode M1. Moreover, in the decrease mode M2, when the catalyst temperature Ta of the NOx trapping catalyst 31 increases to a temperature equal to or higher than the second predetermined temperature T2, the injection amount (target supply amount) of the urea water 46 is gradually increased with the temperature increase. The correction to increase the injection amount (target supply amount) of the urea water 46 at a temperature equal to or higher than the second predetermined temperature T2 will be referred to as decrease return mode M3. The decrease return mode M3 is possessed by the engine control device 50. Needless to say, it may be performed in the decrease mode M2 to gradually increase the injection amount (target supply amount) more than at the time of the second predetermined temperature T2 when the catalyst temperature Ta of the NOx trapping catalyst 31 is equal to or higher than the second predetermined temperature T2 in the decrease mode M2 without distinguishing between the decrease mode M2 and the decrease return mode M3.

The injection amount (target supply amount) of the urea water 46 is a target value of the average urea water consumption speed as shown in FIG. 2. This is because as follows: Since the urea water injection valve 41 is a fully opened or fully closed type valve, the injection amount per unit time when the valve is opened is constant. Moreover, the transmission pressure of the urea water 46 supplied to the urea water injection valve 41 is supplied by the urea water pump 44 at a constant pressure. For this reason, in order to inject the urea water 46 only in a necessary amount, the valve opening time is adjusted, and this corresponds to the main element amount of the urea water 46 in the urea water tank 45.

The urea water injection controller 54 gradually increases the target amount of supply from the urea water injection valve 41 (the target value of the average urea water consumption speed) of the urea water 46 at the time of the normal mode M1 shown by the broken line in FIG. 2 when the catalyst temperature Tb of the SCR catalyst 42 reaches a lower limit temperature T3 of the activating temperature, and when it becomes the first predetermined temperature T1, the urea water injection controller 54 controls the actuation of the urea water injection valve 41 so that it further increases. On the other hand, at the time of the decrease mode M2, as shown by the solid line, when the catalyst temperature Tb becomes equal to or higher than the first predetermined temperature T1, the urea water injection controller 54 performs control so that the target amount of supply of the urea water 46 from the urea water injection valve 41 gradually decreases. That is, when the decrease mode M2 is set, the urea water injection controller 54 controls the amount of supply of the urea water from the urea water injection valve 41 so that the target value of the average urea water consumption speed of the urea water is lower than in the normal mode M1.

In the present embodiment, since the NOx purification rate at the SCR catalyst 42 decreases due to insufficient urea water at the time of the decrease mode M2 where the target supply amount of the urea water 46 is gradually decreased, the NOx purge control is executed so that the NOx purification rate (occlusion rate) at the NOx trapping catalyst 31 is improved.

Moreover, since the NOx purification rate of the NOx trapping catalyst 31 decreases when the catalyst temperature Ta of the NOx trapping catalyst 31 exceeds the second predetermined temperature T2, in the present embodiment, in order to supplement the NOx purification rate decrease at the NOx trapping catalyst 31 with the SCR catalyst 42, the urea water injection controller 54 controls the actuation of the urea water injection valve 41 so that the decreased target supply amount of the urea water 46 increases with the increase in the catalyst temperature Tb of the SCR catalyst 42.

The NOx purge controller 52 executes a control to reduce the NOx occluded in the NOx trapping catalyst 31 by supplying a reducing agent based on the occlusion state of the NOx occluded in the NOx trapping catalyst 31 (NOx occlusion amount A). Specifically, the NOx purge control when the normal mode M1 is set and the NOx purge control when the decrease mode M2 is set are executed. Hereinafter, the NOx purge control in the case of the normal mode M1 will be referred to as "normal purge control", and the NOx purge control in the case of the decrease mode M2, as "decrease purge control".

The NOx purge controller 52 provided in the engine control device 50 determines that there is a request for NOx purge (NOx purge control is necessary) when the NOx occlusion amount A of the NOx trapping catalyst 31 estimated by the estimator 51 is equal to or higher than a predetermined upper limit threshold value Ah (A≥Ah), and executes NOx purge control in an operation state where NOx purge control is executable. Here, post injection is executed by the in-cylinder injection valve 4. In executing the NOx purge control, the NOx purge controller 52 executes the NOx purge control with either the normal purge control or the decrease purge control according to the presence or absence of the setting of the decrease mode M2.

The processing contents of the normal purge control are to perform post injection to make the surrounding atmosphere of the NOx trapping catalyst 31 rich, and to increase the temperature of the NOx trapping catalyst 31 to a temperature equal to or higher than an NOx purge possible temperature to release and reduce the NOx of the NOx trapping catalyst 31. The operation state where NOx purge control is executable is also determined, for example, from the catalyst temperature of the NOx trapping catalyst 31, the engine load and the like.

When the decrease mode M2 is set, the NOx purge controller 52 executes the decrease purge control different from the normal purge control. In the decrease purge control, at least one of the following is executed: making the amount of fuel injection by the post injection larger than in the normal purge control; executing the purge control for a longer time than in the normal purge control; and executing the purge control at shorter intervals than in the normal purge control. Needless to say, more than one of these three may be executed in combination. In the present embodiment, when the decrease mode M2 is set, the NOx purge controller 52 executes a decrease purge control where the amount of fuel injection by the post injection is larger than at the time of the normal purge control.

The upper limit threshold value Ah is a threshold value for determining whether it is necessary to remove the NOx occluded in the NOx trapping catalyst 31 or not (saturated state of the NOx trapping catalyst 31), and is preset based on the capacity of the NOx trapping catalyst 31 and the like and stored in the ROM. The NOx purge controller 52 stops the post injection from the in-cylinder injection valve 4 to stop the NOx purge control when the NOx occlusion amount A estimated by the estimator 51 becomes less than a predetermined end threshold value Af (A<Af) after the NOx purge control is started. As described above, the NOx purge controller 52 executes the normal purge control when the normal mode M1 is set, and executes the decrease purge control different from the normal purge control when the decrease mode M2 is set. The end threshold value Af is prestored in the ROM and set.

The regeneration controller 53 determines the presence or absence of a request for the regeneration of a DPF that removes PM from the filter 32 (the necessity for regeneration control) based on the amount of PM collected by the filter 32 (PM accumulation amount D), and executes regeneration control (DPF regeneration processing) according to the regeneration request (execution request). Specifically, the regeneration controller 53 determines that regeneration control is necessary when the PM accumulation amount D estimated by the estimator 51 is equal to or higher than a preset predetermined regeneration start threshold value Df, and determines that regeneration control is unnecessary when the PM accumulation amount D is less than the regeneration start threshold value Df. This regeneration start threshold value Df is preset in the ROM.

In a case where NOx purge control is executed by the NOx purge controller 52 when it is determined that there is a regeneration request, the regeneration controller 53 gives precedence to the control by the NOx purge controller 52. That is, in this case, when NOx purge control is executed by the NOx purge controller 52, the regeneration controller 53 starts regeneration control after the NOx purge control is finished.

Since, during regeneration, the amount of NOx discharged from the cylinder 2 increases by the return gas being cut by the EGR valve 19 being closed as well as the engine 1 being in high-load operation state, it is necessary to secure the NOx occlusion ability of the NOx trapping catalyst 31 before regeneration control. Therefore, when NOx purge control is necessary when there is a regeneration request, the NOx discharge amount during regeneration control can be reduced by executing NOx purge control prior to regeneration control.

The regeneration controller 53 stops the post injection by the in-cylinder injection valve 4 when the PM accumulation amount D estimated by the estimator 51 becomes less than the predetermined regeneration end threshold value Df (D<Df) after regeneration control is started, and ends the regeneration control. The regeneration end threshold value is preset to a low value close to zero.

That is, the exhaust purification apparatus 30 according to the present embodiment is provided with the temperature sensors 26A and 26B that detect the catalyst temperatures Ta and Tb of the NOx trapping catalyst 31 and the SCR catalyst 42, the urea water injection valve 41 that supplies the urea water 46 by injecting it to the exhaust passage 16A, the NOx trapping catalyst 31 disposed on the exhaust upstream side of the urea water injection valve 41, the SCR catalyst 42 disposed on the exhaust downstream side of the urea water injection valve 41, the urea water injection controller 54 that controls the amount of supply of the urea water 46 from the urea water injection valve 41, the remaining amount detection sensor 27 that detects the remaining amount of the urea water, and the in-cylinder injection valve 4 as the purification rate increasing means.

Moreover, the engine control device 50 is provided with the normal mode M1, the decrease mode M2 where the amount of supply of the urea water 46 from the urea water injection valve 41 is suppressed compared with in the normal mode M1, the purge controller 52 that controls the actuation of the purification rate increasing means (the in-cylinder injection valve 4) so that the reducing atmosphere of the exhaust becomes rich, that is, so that the degree of the reducing atmosphere becomes high, that the execution period of the reducing atmosphere of the exhaust becomes longer than normal or that the execution interval of the reducing atmosphere of the exhaust becomes shorter than normal, and the urea water injection controller 54.

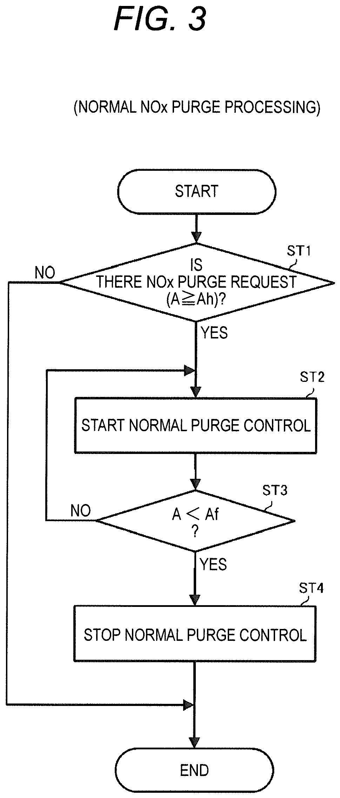

Hereinafter, regarding the contents of the exhaust purification processing by the engine control device 50, the flowcharts shown in FIGS. 3 to 8 are used. These flowcharts are repetitively executed in predetermined calculation circles at the engine control device 50. Separately from these flowcharts, the estimation of the NOx occlusion amounts A and B and the PM accumulation amount D by the estimator 51 are being always executed, and the NOx purge controller 52, the regeneration controller 53 and the urea water injection controller 54 read the estimated values and the detection information from the sensors and execute the NOx purge processing, the DPF regeneration processing and the urea water injection amount processing, respectively. Moreover, in the present embodiment, it is assumed that the engine 1 has already been started.

The normal NOx purge processing executed at the NOx purge controller 52 will be described by using FIG. 3. As shown in FIG. 3, the NOx purge controller 52 reads necessary information such as the NOx occlusion amount A estimated by the estimator 51, and at step ST1, compares the NOx occlusion amount A and the upper limit threshold value Ah to thereby determine the presence or absence of a NOx purge request. When the NOx occlusion amount A is equal to or higher than the upper limit threshold value Ah (A≥Ah), the NOx purge controller 52 determines that there is an NOx purge request (NOx purge period), and advances to step ST2 to start normal purge control. After the start of the normal purge control, at step ST3, the NOx purge controller 52 determines whether the NOx occlusion amount A is less than the predetermined end threshold value Af (A<Af) or not, and when it becomes less than the end threshold value Af, determining that the NOx occlusion rate of the NOx trapping catalyst 31 increases to improve the purification efficiency, the NOx purge controller 52 advances to step ST4 to stop the normal purge control, and ends the normal NOx purge processing.

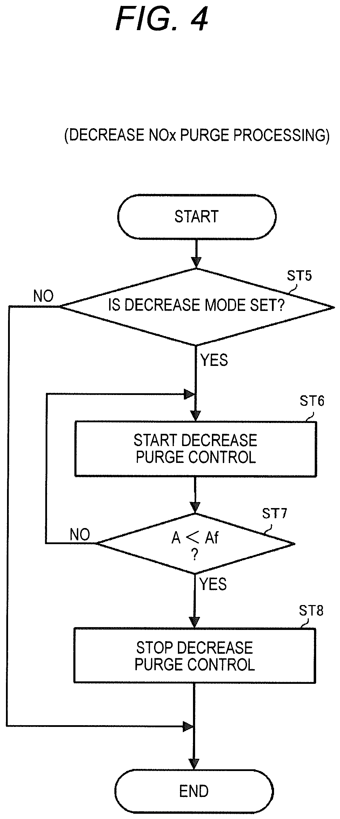

The reduction NOx purge processing executed at the NOx purge controller 52 will be described by using FIG. 4. The reduction NOx purge processing shown in FIG. 4 is executed when the decrease mode M2 is set. As shown in FIG. 4, at step ST5, the NOx purge controller 52 determines whether the decrease mode M2 is set or not, and when the decrease mode M2 is set, advances to step ST6 to start the decrease purge control. For this reason, the NOx purification rate (occlusion rate) at the NOx trapping catalyst 31 is higher than at the time of the normal purge control. After the start of the decrease purge control, at step ST7, the NOx purge controller 52 determines whether the NOx occlusion amount A is less than the predetermined end threshold value Af (A<Af) or not, and when it becomes less than the end threshold value Af, the NOx purge controller 52 advances to step ST8 to stop the decrease purge control, and ends the reduction NOx purge processing.

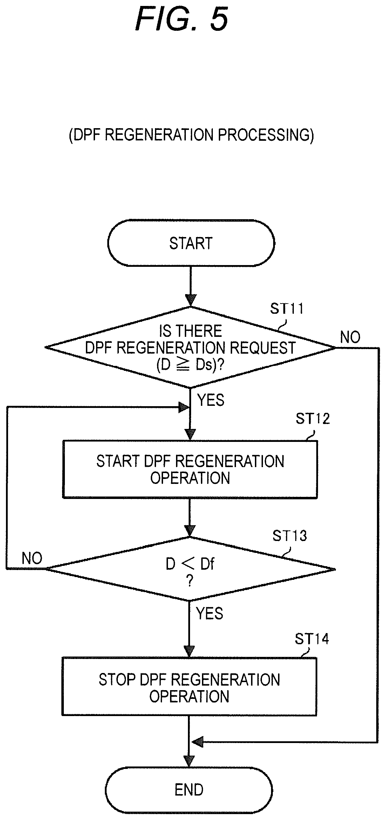

Next, the DPF regeneration processing executed at the regeneration controller 53 will be described by using FIG. 5. The regeneration controller 53 reads necessary information such as the PM accumulation amount D estimated by the estimator 51, and at step ST11, determines the presence or absence of a DPF regeneration request by comparing the PM accumulation amount D and a regeneration start threshold value Ds. When the PM accumulation amount D is equal to or higher than the regeneration start threshold value Ds (D≥Ds), the regeneration controller 53 determines that there is a DPF regeneration request (the regeneration period of the filter 32), and advances to step ST12 to start DPF regeneration. After the start of the DPF regeneration, at step ST13, the regeneration controller 53 determines whether the PM accumulation amount D is less than the predetermined end threshold value Df (D<Df) or not, and when it becomes less than the end threshold value Df, determining that the removal of PM of the filter 32 is completed, the regeneration controller 53 advances to step ST14 to stop the DPF regeneration, and ends the DPF regeneration processing.

### (First embodiment)

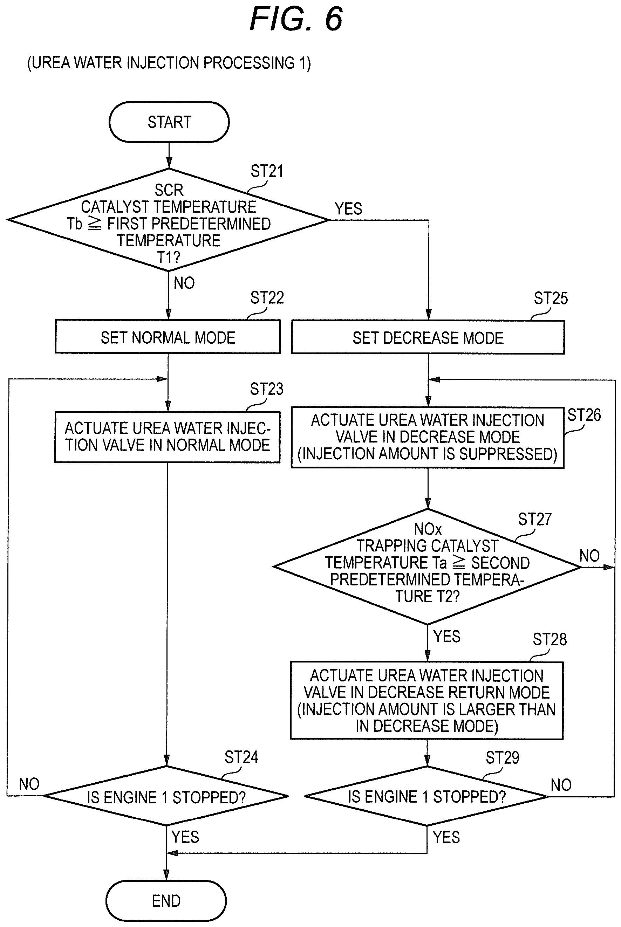

Next, a first embodiment of the urea water injection processing executed at the urea water injection controller 54 will be described by using FIG. 6. In FIG. 6, this is denoted as urea water injection processing 1. In the present embodiment, the determination as to switching between the normal mode M1 and the decrease mode M2 is made by using the catalyst temperature Tb of the SCR catalyst 42. The urea water injection controller 54 reads necessary information such as the catalyst temperature Tb of the SCR catalyst 42, and at step ST21, compares the catalyst temperature Tb and the first predetermined temperature T1 as the determination value to thereby perform the mode switching determination. When the catalyst temperature Tb is less than the first predetermined temperature T1, the urea water injection controller 54 advances to step ST22 and sets the normal mode M1. When the catalyst temperature Tb is equal to or higher than the first predetermined temperature T1 (Tb≥T1), determining that the SCR catalyst 42 has reached the temperature region where the urea water 46 is consumed in a large amount, the urea water injection controller 54 sets the decrease mode M2 at step ST25.

When the normal mode M1 is set at step ST22, the urea water injection controller 54 actuates the urea water injection valve 41 in the normal mode M1 at step ST23, and supplies the urea water 46 to the exhaust passage 16A to supply it to the SCR catalyst 42. For this reason, at the SCR catalyst 42, reduction of NOx by using, as the reducing agent, ammonia (NH₃) generated by hydrolyzation is performed. The urea water injection controller 54 determines whether the engine 1 is stopped or not, for example, from the presence or absence of the engine rotation number and the operation state of the ignition switch at ST24, and when the engine 1 is stopped, the urea water injection valve 41 stops actuating and the urea water injection processing is ended.

When the decrease mode M2 is set at step ST25, the urea water injection controller 54 actuates the urea water injection valve 41 in the decrease mode M2 at step ST26, and injects the urea water 46 in an amount suppressed compared with at the time of the normal mode M1 to the exhaust passage 16A to supply it to the SCR catalyst 42. For this reason, at the SCR catalyst 42, reduction of NOx by using, as the reducing agent, ammonia (NH₃) generated by hydrolyzation is performed. However, in the case of the decrease mode M2, since the injection amount (target supply amount) per unit time of the urea water 46 supplied to the SCR catalyst 42 is suppressed compared with in the normal mode M1, the NOx purification rate at the SCR catalyst 42 decreases. However, as described with reference to FIG. 4, when the decrease mode M2 is set, the NOx purge processing (decrease purge control) for the NOx trapping catalyst 31 is executed in parallel. Since for this reason, the NOx purification rate decreased at the SCR catalyst 42 is supplemented with the purification rate (occlusion rate) improvement on the side of the NOx trapping catalyst 31, the consumption amount of the urea water 46 can be suppressed while the purification rate of the NOx is maintained, and the occurrence of the ammonia slip can also be prevented. As a consequence, stopping of restart of the engine 1 and refilling of the urea water 46 which are performed by the driver because of insufficient urea water are suppressed, which leads to an improvement in drivability.

The urea water injection controller 54 compares the catalyst temperature Ta of the NOx trapping catalyst 31 and the second predetermined temperature T2 at step ST27, and determines the state of the NOx purification rate (occlusion rate) of the NOx trapping catalyst 31. When the catalyst temperature Ta of the NOx trapping catalyst 31 becomes equal to or higher than the second predetermined temperature T2 (Ta≥T2), the urea water injection controller 54 determines that the NOx occlusion rate on the side of the NOx trapping catalyst 31 has reached the decreasing region, and advances to step ST28. The urea water injection controller 54 actuates the urea water injection valve in the decrease return mode at step ST28. Since for this reason, the injection amount (target supply amount) per unit time of the urea water 46 supplied to the SCR catalyst 42 is larger than in the decrease mode M2, the NOx purification rate at the SCR catalyst 42 increases, and the decrease of the purification rate (occlusion rate) of the NOx trapping catalyst 31 is supplemented with the increase of the NOx purification rate (reduction rate) on the side of the SCR catalyst 42. For this reason, the consumption amount of the urea water 46 can be suppressed while the NOx purification rate is maintained, and the occurrence of the ammonia slip can also be prevented.

The decrease mode M2 and the decrease return mode performed continuously from the decrease mode M2 are executed by the urea water injection controller 54 until the engine 1 is stopped at step ST29, and are ended when the engine 1 is stopped.

### (Second embodiment)

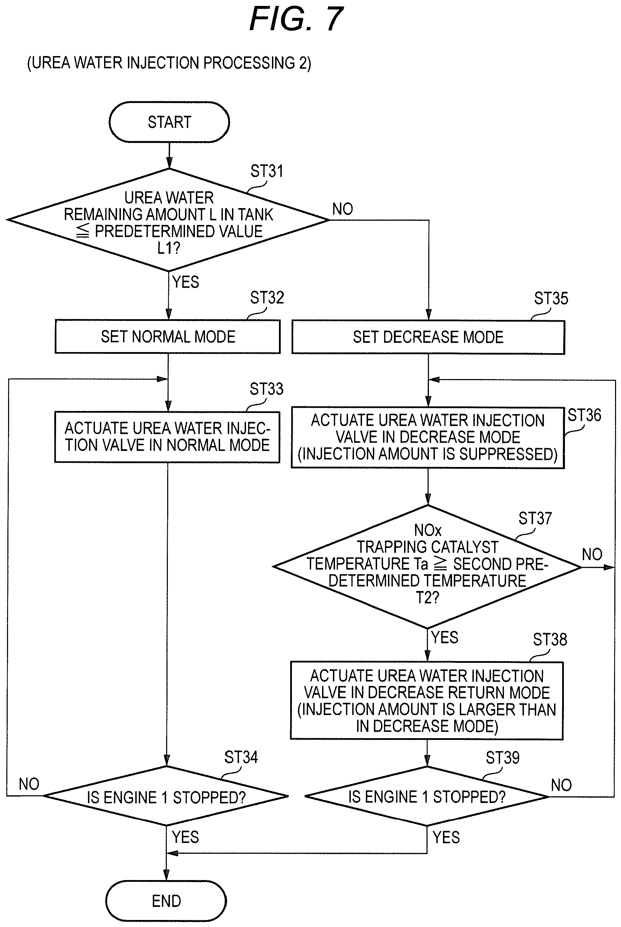

Next, a second embodiment of the urea water injection processing executed at the urea water injection controller 54 will be described by using FIG. 7. In FIG. 7, this is denoted as urea water injection processing 2.

In the present embodiment, the determination as to switching between the normal mode M1 and the decrease mode M2 is made by using the remaining amount L in the urea water tank 45. Except for this, the contents are similar to those of the urea water injection processing 1 shown in FIG. 6; therefore, similar steps (ST32 to ST39) are described in brief as appropriate.

The urea water injection controller 54 reads necessary information such as the urea water remaining amount L in the urea water tank 45 detected by the remaining amount detection sensor 27, and at step ST31, compares the urea water remaining amount L and a predetermined value L1 as the determination value to thereby perform mode switching determination. Unless the urea water remaining amount L is less than the predetermined value L1 (L≤L1), the urea water injection controller 54 advances to step ST32 and sets the normal mode M1, and when the urea water remaining amount L is less than the predetermined value L1 (L≤L1), determining that the remaining amount of the urea water 46 is small, the urea water injection controller 54 sets the decrease mode M2 at step ST35.

When the normal mode M1 is set, the urea water injection controller 54 actuates the urea water injection valve 41 in the normal mode M1 at step ST33, executes the normal mode M1 until it is determined that the engine 1 is stopped at ST34, and ends the urea water injection processing when it is determined that the engine 1 is stopped.

When the decrease mode M2 is set at step ST35, the urea water injection controller 54 actuates the urea water injection valve 41 in the decrease mode M2 at step ST36, and injects the urea water 46 in an amount (injection amount) per unit time suppressed compared with at the time of the normal mode M1 to the exhaust passage 16A to supply it to the SCR catalyst 42. For this reason, the NOx purification rate at the SCR catalyst 42 is lower than in the normal mode M1. However, as described with reference to FIG. 4, when the decrease mode M2 is set, the NOx purge processing (decrease purge control) for the NOx trapping catalyst 31 is executed in parallel. Since for this reason, the NOx purification rate decreased at the SCR catalyst 42 is supplemented with the purification rate (occlusion rate) improvement on the side of the NOx trapping catalyst 31, the consumption amount of the urea water 46 can be suppressed while the NOx purification rate is maintained, and the occurrence of the ammonia slip can also be prevented. As a consequence, stopping of restart of the engine 1 and refilling of the urea water 46 which are performed by the driver because of insufficient urea water are suppressed, which leads to an improvement in drivability.

The urea water injection controller 54 determines the state of the NOx purification rate (occlusion rate) of the NOx trapping catalyst 31 at step ST37, and when the catalyst temperature Ta of the NOx trapping catalyst 31 becomes equal to or higher than the second predetermined temperature T2 (Ta≥T2), the urea water injection controller 54 determines that the NOx occlusion rate on the side of the NOx trapping catalyst 31 has reached the decreasing region, and advances to step ST38. The urea water injection controller 54 actuates the urea water injection valve in the decrease return mode at step ST38. Since for this reason, the amount (injection amount) per unit time of the urea water 46 supplied to the SCR catalyst 42 is larger than in the decrease mode M2, the NOx purification rate at the SCR catalyst 42 increases, and the decrease of the purification rate (occlusion rate) of the NOx trapping catalyst 31 is supplemented with the increase of the NOx purification rate (reduction rate) on the side of the SCR catalyst 42. For this reason, the consumption amount of the urea water 46 can be suppressed while the NOx purification rate is maintained, and the occurrence of the ammonia slip can also be prevented.

The decrease mode M2 and the decrease return mode performed continuously from the decrease mode M2 are executed by the urea water injection controller 54 until the engine 1 is stopped at step ST39, and are ended when the engine 1 is stopped.

### (Third embodiment)

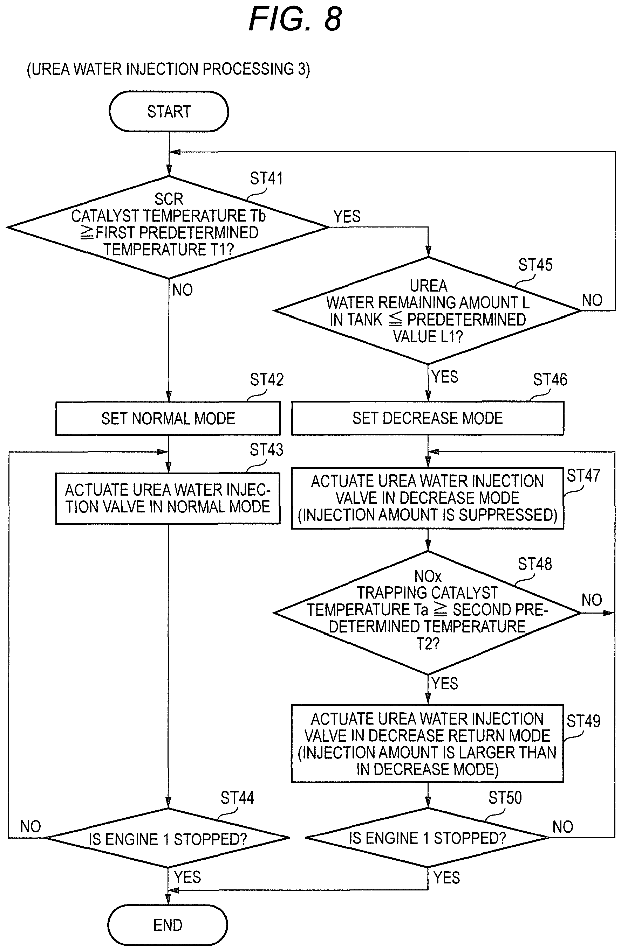

Next, a third embodiment of the urea water injection processing executed at the urea water injection controller 54 will be described by using FIG. 8. In FIG. 8, this is denoted as urea water injection processing 3.

The present embodiment is a combination of the first embodiment and the second embodiment. That is, for the determination as to switching between the normal mode M1 and the decrease mode M2, the catalyst temperature Tb of the SCR catalyst 42 and the urea water remaining amount L in the urea water tank 45 are both used. Except for this, the contents are similar to, for example, those of the urea water injection processings 1 and 2 shown in FIGS. 6 and 7; therefore, similar steps (ST42 to ST44, ST46 to ST50) are described in brief as appropriate.

The urea water injection controller 54 compares the catalyst temperature Tb and the first predetermined temperature T1 at step ST41, and when the catalyst temperature Tb is less than the first predetermined temperature T1, advances to step ST42 and sets the normal mode M1. When the normal mode M1 is set, the urea water injection controller 54 actuates the urea water injection valve 41 in the normal mode M1 at step ST43, executes the normal mode M1 until it is determined that the engine 1 is stopped at step ST44, and ends the urea water injection processing when it is determined that the engine 1 is stopped.

When the urea water remaining amount L is less than the predetermined value L1 (L≤L1) at step ST41, the urea water injection controller 54 advances to step ST45, and compares the urea water remaining amount L detected by the remaining amount detection sensor 27 and the predetermined value L1. When the urea water remaining amount L is less than the predetermined value L1 (L≤L1), determining that the SCR catalyst 42 has reached the temperature region where the urea water 46 is consumed in a large amount and the remaining amount of the urea water 46 in the urea water tank 45 becomes small, the urea water injection controller 54 sets the decrease mode M2 at step ST46.

When the decrease mode M2 is set at step ST46, the urea water injection controller 54 actuates the urea water injection valve 41 in the decrease mode M2 at step ST47, and injects the urea water 46 in an amount (injection amount) per unit time suppressed compared with at the time of the normal mode M1 to the exhaust passage 16A to supply it to the SCR catalyst 42. For this reason, the NOx purification rate at the SCR catalyst 42 decreases the normal mode M1. However, as described with reference to FIG. 4, when the decrease mode M2 is set, the NOx purge processing (decrease purge control) for the NOx trapping catalyst 31 is executed in parallel. Since for this reason, the NOx purification rate decreased by the SCR catalyst 42 is supplemented with the purification rate (occlusion rate) improvement on the side of the NOx trapping catalyst 31, the consumption amount of the urea water 46 can be suppressed while the NOx purification rate is maintained, and the occurrence of the ammonia slip can also be prevented. As a consequence, stopping of restart of the engine 1 and refilling of the urea water 46 which are performed by the driver because of insufficient urea water are suppressed, which leads to an improvement in drivability.

The urea water injection controller 54 determines the state of the NOx purification rate (occlusion rate) of the NOx trapping catalyst 31 at step ST48, and when the catalyst temperature Ta of the NOx trapping catalyst 31 becomes equal to or higher than the second predetermined temperature T2 (Ta≥T2), the urea water injection controller 54 determines that the NOx occlusion rate on the side of the NOx trapping catalyst 31 has reached the decreasing region, and advances to step ST49. The urea water injection controller 54 actuates the urea water injection valve in the decrease return mode at step ST49. Since for this reason, the amount (injection amount) per unit time of the urea water 46 supplied to the SCR catalyst 42 is larger than in the decrease mode M2, the NOx purification rate at the SCR catalyst 42 increases, and the decrease of the purification rate (occlusion rate) of the NOx trapping catalyst 31 is supplemented with the increase of the NOx purification rate (reduction rate) on the side of the SCR catalyst 42. For this reason, the consumption amount of the urea water 46 can be suppressed while the NOx purification rate is maintained, and the occurrence of the ammonia slip can also be prevented.

The decrease mode M2 and the decrease return mode performed continuously from the decrease mode M2 are executed by the urea water injection controller 54 until the engine 1 is stopped at step ST50, and are ended when the engine 1 is stopped.

As described above, in the third embodiment, since the decrease mode M2 is set when the two parameters of the catalyst temperature Tb of the SCR catalyst 42 and the remaining amount of the urea water 46 in the urea water tank 45 satisfy the condition, transitional increase of the catalyst temperature Tb and transition to the decrease mode M2 due to transitional decrease of the urea water 46 in the urea water tank 45 can be prevented. For this reason, urea water injection control and NOx purge control more suitable for the state of the SCR catalyst 42 and the urea water remaining amount in the urea water tank 45 can be executed at an appropriate time, so that stable NOx purification performance can be maintained.

The effects described in the embodiments of the present invention are merely a list of most favorable effects produced by the present invention, and the effects by the present invention are not limited to those mentioned in the embodiments of the present invention.

## Claims

1. An exhaust purification apparatus (30) comprising:
a urea water supplier (41) that is configured to supply urea water (46) into an exhaust passage (16A) in which exhaust discharged from an internal-combustion engine (1) flows;
a nitrogen oxide trapping catalyst (31) that is disposed on an exhaust upstream side of the urea water supplier (41), the nitrogen oxide trapping catalyst (31) that is configured to occlude nitrogen oxide contained in the exhaust under an oxidizing atmosphere, and is configured to reduce the nitrogen oxide under a reducing atmosphere;
a selective reduction catalyst (42) that is disposed on an exhaust downstream side of the urea water supplier (41), the selective reduction catalyst (42) that is configured to reduce the nitrogen oxide contained in the exhaust by using the urea water supplied from the urea water supplier as a reducing agent; and
a controller (50) that is configured to control an amount of supply of the urea water supplied from the urea water supplier, and that has a normal mode (M1), a decrease mode (M2) in which the amount of supply of the urea water supplied from the urea water supplier is suppressed in comparison to the normal mode (M1), and a decrease return mode (M3) in which the controller (50) is configured to control the urea water supplier so as to increase, in comparison to the decrease mode (M2), the amount of supply of the urea water supplied from the urea water supplier, wherein
the exhaust purification apparatus (30) further comprises a urea catalyst temperature detector (26B) that is configured to detect a temperature of the selective reduction catalyst (42) and a trapping catalyst temperature detector (26A) that is configured to detect a temperature of the nitrogen oxide trapping catalyst (31), wherein
the controller (50) is configured to set the decrease mode (M2) when the temperature of the selective reduction catalyst (42) detected by the urea catalyst temperature detector (26B) is equal to or higher than a first predetermined temperature (T1), and
the controller (50) is configured to set the decrease return mode (M3) when the temperature of the nitrogen oxide trapping catalyst (31) detected by the trapping catalyst temperature detector (26A) is equal to or higher than a second predetermined temperature (T2), which is higher than the first predetermined temperature (T1).

2. The exhaust purification apparatus (30) according to claim 1, further comprising a urea remaining amount detector (27) that is configured to detect a remaining amount of the urea water, wherein
the controller is configured to set the decrease mode when the remaining amount of the urea water detected by the urea water remaining amount detector is equal to or lower than a predetermined value.

3. The exhaust purification apparatus (30) according to claim 1 or 2, wherein
the controller has a urea water injection controller (54) that is configured to control, in the decrease mode, the amount of supply of the urea water supplied from the urea water supplier so that a target value of an average urea water consumption speed of the urea water is lower than in the normal mode.

4. The exhaust purification apparatus (30) according to any one of claims 1 to 3, further comprising purification rate increasing means (4) that is configured to actuate the internal-combustion engine so that the exhaust is brought into the reducing atmosphere where the nitrogen oxide occluded in the nitrogen oxide trapping catalyst is released and reduced for increasing a target purification rate of the nitrogen oxide at the nitrogen oxide trapping catalyst, wherein
the controller is configured to actuate the purification rate increasing means in the decrease mode.

5. The exhaust purification apparatus (30) according to claim 4, wherein
the controller has a purge controller (52) that is configured to control the purification rate increasing means so that a degree of the reducing atmosphere increases.

6. The exhaust purification apparatus (30) according to claim 4, wherein
the controller has a purge controller (52) that is configured to control the purification rate increasing means so that an execution period of the reducing atmosphere becomes longer than normal.

7. The exhaust purification apparatus (30) according to claim 4, wherein
the controller has a purge controller (52) that is configured to control the purification rate increasing means so that an execution period of the reducing atmosphere becomes shorter than a normal execution period of the reducing atmosphere.

## Patentansprüche

1. Abgasreinigungsvorrichtung (30) mit:
einer Harnstoffwasser-Zufuhreinrichtung (41), die dafür konfiguriert ist, Hamstoffwasser (46) in einen Abgaskanal (16A) zuzuführen, in dem von einem Verbrennungsmotor (1) ausgestoßenes Abgas strömt;
einem Stickstoffoxid-Katalysator (31), der auf einer Abgasstromaufwärtsseite der Harnstoffwasser-Zufuhreinrichtung (41) angeordnet ist, wobei der Stickstoffoxid-Katalysator (31) dafür konfiguriert ist, im Abgas enthaltenes Stickstoffoxid unter einer Oxidationsatmosphäre zu binden, und dafür konfiguriert ist, das Stickstoffoxid unter einer Reduktionsatmosphäre zu reduzieren;
einem SCR- (selektive katalytische Reduktion) Katalysator (42), der auf einer Abgasstromabwärtsseite der Harnstoffwasser-Zufuhreinrichtung (41) angeordnet ist, wobei der SCR-Katalysator (42) dafür konfiguriert ist, das im Abgas enthaltene Stickstoffoxid unter Verwendung des von der Harnstoffwasser-Zufuhreinrichtung zugeführten Harnstoffwassers als Reduktionsmittel zu reduzieren; und
einer Steuereinheit (50), die dafür konfiguriert ist, eine Zufuhrmenge des von der Harnstoffwasser-Zufuhreinrichtung zugeführten Hamstoffwassers zu steuern und einen Normalmodus (M1), einen Absenkmodus (M2), in dem die Zufuhrmenge des von der Harnstoffwasser-Zufuhreinrichtung zugeführten Hamstoffwassers im Vergleich zum Normalmodus (M1) vermindert ist, und einen Absenkungsrückkehrmodus (M3) aufweist, in dem die Steuereinheit (50) dafür konfiguriert ist, die Harnstoffwasser-Zufuhreinrichtung derart zu steuern, dass im Vergleich zum Absenkmodus (M2) die Zufuhrmenge des von der Harnstoffwasser-Zufuhreinrichtung zugeführten Hamstoffwassers erhöht wird,
wobei
die Abgasreinigungsvorrichtung (30) ferner einen Harnstoff-Katalysatortemperaturdetektor (26B) aufweist, der dafür konfiguriert ist, eine Temperatur des SCR-Katalysators (42) zu erfassen, und einen Stickstoffoxid-Katalysatortemperaturdetektor (26A), der dafür konfiguriert ist, eine Temperatur des Stickstoffoxid-Katalysators (31) zu erfassen, wobei
die Steuereinheit (50) dafür konfiguriert ist, den Absenkmodus (M2) einzustellen, wenn die durch den Harnstoff-Katalysatortemperaturdetektor (26B) erfasste Temperatur des SCR-Katalysators (42) gleich oder höher einer ersten vorgegebenen Temperatur (T1) ist, und
die Steuereinheit (50) dafür konfiguriert ist, den Absenkungsrückkehrmodus (M3) einzustellen, wenn die durch den Stickstoffoxid-Katalysatortemperaturdetektor (26A) erfasste Temperatur des Stickstoffoxid-Katalysators (31) gleich oder höher einer zweiten vorgegebenen Temperatur (T2) ist, die höher ist als die erste vorgegebene Temperatur (T1).

2. Abgasreinigungsvorrichtung (30) nach Anspruch 1, ferner mit einem Harnstoffwasser-Restmengendetektor (27), der dafür konfiguriert ist, eine Restmenge des Harnstoffwassers zu erfassen, wobei
die Steuereinheit dafür konfiguriert ist, den Absenkmodus einzustellen, wenn die durch den Harnstoffwasser-Restmengendetektor (27) erfasste Restmenge des Harnstoffwassers gleich oder kleiner einem vorgegebenen Wert ist.

3. Abgasreinigungsvorrichtung (30) nach Anspruch 1 oder 2, wobei
die Steuereinheit eine Harnstoffwasser-Einspritzsteuereinheit (54) aufweist, die dafür konfiguriert ist, im Absenkmodus die Zufuhrmenge des von der Harnstoffwasser-Zufuhreinrichtung zugeführten Hamstoffwassers derart zu steuern, dass ein Sollwert einer durchschnittlichen Hamstoffwasser-Verbrauchsgeschwindigkeit des Hamstoffwassers niedriger ist als im Normalmodus.

4. Abgasreinigungsvorrichtung (30) nach einem der Ansprüche 1 bis 3, ferner mit einer Reinigungsratenerhöhungseinrichtung (4), die dafür konfiguriert ist, den Verbrennungsmotor derart zu betreiben, dass das Abgas in die Reduktionsatmosphäre gebracht wird, in der das im Stickstoffoxid-Katalysator gebundene Stickstoffoxid freigesetzt und reduziert wird, um eine Soll-Reinigungsrate des Stickstoffoxids im Stickstoffoxid-Katalysator zu erhöhen, wobei
die Steuereinheit dafür konfiguriert ist, die Reinigungsratenerhöhungseinrichtung im Absenkmodus zu aktivieren.

5. Abgasreinigungsvorrichtung (30) nach Anspruch 4, wobei
die Steuereinheit eine Spülsteuereinheit (52) aufweist, die dafür konfiguriert ist, die Reinigungsratenerhöhungseinrichtung derart zu steuern, dass ein Grad der Reduktionsatmosphäre erhöht wird.

6. Abgasreinigungsvorrichtung (30) nach Anspruch 4, wobei
die Steuereinheit eine Spülsteuereinheit (52) aufweist, die dafür konfiguriert ist, die Reinigungsratenerhöhungseinrichtung derart zu steuern, dass eine Ausführungsperiode der Reduktionsatmosphäre länger als normal wird.

7. Abgasreinigungsvorrichtung (30) nach Anspruch 4, wobei
die Steuereinheit eine Spülsteuereinheit (52) aufweist, die dafür konfiguriert ist, die Reinigungsratenerhöhungseinrichtung derart zu steuern, dass eine Ausführungsperiode der Reduktionsatmosphäre kürzer wird als eine normale Ausführungsperiode der Reduktionsatmosphäre.

## Revendications

1. Dispositif de purification d'échappement (30) comprenant :
un distributeur d'urée aqueuse (41) qui est configuré pour fournir de l'urée aqueuse (46) dans un passage d'échappement (16A) dans lequel s'écoule l'échappement déchargé par un moteur à combustion interne (1) ;
un catalyseur de piégeage d'oxyde d'azote (31) qui est disposé du côté en amont de l'échappement du distributeur d'urée aqueuse (41), lequel catalyseur de piégeage d'oxyde d'azote (31) est configuré pour occlure l'oxyde d'azote contenu dans l'échappement dans une atmosphère oxydante, et est configuré pour réduire l'oxyde d'azote dans une atmosphère réductrice ;
un catalyseur de réduction sélectif (42) qui est disposé du côté en aval de l'échappement du distributeur d'urée aqueuse (41), lequel catalyseur de réduction sélectif (42) est configuré pour réduire l'oxyde d'azote contenu dans l'échappement en utilisant l'urée aqueuse fournie par le distributeur d'urée aqueuse en tant qu'agent réducteur ; et
un contrôleur (50) qui est configuré pour contrôler une quantité d'urée aqueuse fournie par le distributeur d'urée aqueuse, qui a un mode normal (M1), un mode de diminution (M2) dans lequel la quantité d'urée aqueuse fournie par le distributeur d'urée aqueuse est supprimée en comparaison avec le mode normal (M1), et un mode de retour après diminution (M3) dans lequel le contrôleur (50) est configuré pour contrôler la quantité d'urée aqueuse fournie de façon qu'elle augmente, en comparaison avec le mode de diminution (M2), la quantité d'urée aqueuse fournie par le distributeur d'urée aqueuse,
lequel dispositif de purification d'échappement (30) comprend en outre un détecteur de température de catalyseur d'urée (26B) qui est configuré pour détecter une température du catalyseur de réduction sélectif (42) et un détecteur de température de catalyseur de piégeage (26A) qui est configuré pour détecter une température du catalyseur de piégeage d'oxyde d'azote (31),
dans lequel le contrôleur (50) est configuré pour établir le mode de diminution (M2) quand la température du catalyseur de réduction sélectif (42) détectée par le détecteur de température de catalyseur d'urée (26B) est égale ou supérieure à une première température prédéterminée (T1), et
le contrôleur (50) est configuré pour établir le mode de retour après diminution (M3) quand la température du catalyseur de piégeage d'oxyde d'azote (31) détectée par le détecteur de température de catalyseur de piégeage (26A) est égale ou supérieure à une deuxième température prédéterminée (T2), qui est supérieure à la première température prédéterminée (T1).

2. Dispositif de purification d'échappement (30) selon la revendication 1, comprenant en outre un détecteur de quantité restante d'urée aqueuse (27) qui est configuré pour détecter la quantité restante de l'urée aqueuse, dans lequel
le contrôleur est configuré pour établir le mode de diminution quand la quantité restante de l'urée aqueuse détectée par le détecteur de quantité restante d'urée aqueuse est égale ou inférieure à une valeur prédéterminée.

3. Dispositif de purification d'échappement (30) selon la revendication 1 ou 2, dans lequel
le contrôleur a un contrôleur d'injection d'urée aqueuse (54) qui est configuré pour contrôler, en mode de diminution, la quantité de l'urée aqueuse fournie par le distributeur d'urée aqueuse de sorte que la valeur cible d'une vitesse de consommation moyenne de l'urée aqueuse est inférieure à celle dans le mode normal.

4. Dispositif de purification d'échappement (30) selon l'une quelconque des revendications 1 à 3, comprenant en outre un moyen d'augmentation du taux de purification (4) qui est configuré pour actionner le moteur à combustion interne de façon que l'échappement soit placé dans l'atmosphère réductrice où l'oxyde d'azote occlus dans le catalyseur de piégeage d'oxyde d'azote est libéré et réduit pour augmenter le taux de purification visé de l'oxyde d'azote au niveau du catalyseur de piégeage d'oxyde d'azote, dans lequel
le contrôleur est configuré pour actionner le moyen d'augmentation de taux de purification dans le mode de diminution.

5. Dispositif de purification d'échappement (30) selon la revendication 4, dans lequel
le contrôleur a un contrôleur de purge (52) qui est configuré pour contrôler le moyen d'augmentation de taux de purification de façon que le degré de l'atmosphère réductrice augmente.

6. Dispositif de purification d'échappement (30) selon la revendication 4, dans lequel
le contrôleur a un contrôleur de purge (52) qui est configuré pour contrôler le moyen d'augmentation de taux de purification de façon que la période d'exécution de l'atmosphère réductrice devienne plus longue que la normale.

7. Dispositif de purification d'échappement (30) selon la revendication 4, dans lequel
le contrôleur a un contrôleur de purge (52) qui est configuré pour contrôler le moyen d'augmentation de taux de purification de façon que la période d'exécution de l'atmosphère réductrice devienne plus courte que la période d'exécution normale de l'atmosphère réductrice.
